# EUROPEAN PATENT SPECIFICATION

(11) **EP 1 648 649 B1**
(45) Date of publication and mention of the grant of the patent: **08.07.2009**
(21) Application number: 03706792.3
(22) Date of filing: 05.03.2003
(51) Int. Cl.: B23K 26/06, B23K 26/08, B23K 26/32, B23K 26/38, B23K 26/36, B29C 65/16, G02B 27/00, G02B 26/10, B41M 5/26

(54) **PROCESS AND DEVICE OF CUTTING AND/OR WELDING AND/OR MARKING BODIES WITH A LASER BEAM FOCUSED BY A CYLINDRICAL PARABOLIC MIRROR**
VERFAHREN UND VORRICHTUNG ZUM SCHNEIDEN UND/ODER SCHWEISSEN UND/ODER MARKIEREN VON KÖRPERN MIT EINEM DURCH EINEN ZYLINDRISCH PARABOLISCHEN SPIEGEL FOKUSIERTEN LASERSTRAHL
PROCEDE ET DISPOSITIF DE COUPE ET/OU DE SOUDAGE ET/OU DE MARQUAGE DE CORPS AVEC UN FAISCEAU LASER FOCALISE PAR UN MIROIR CYLINDRIQUE PARABOLIQUE

(30) Priority: 05.03.2002 PT 10273502
(43) Date of publication of application: 26.04.2006
(73) Proprietor: Dos Anjos de Oliveira, Antonio Manuel, 4475-240 Gondim (PT)
(72) Inventor: DOS ANJOS DE OLIVEIRA, António Manuel, P-4475-240 Gondim (PT); LEITE MARTINS DE CARVALHO, Jorge, P-4475-240 Gondim (PT); MOREIRA CALEJO PIRES, Margarida Maria, P-4475-240 Gondim (PT); DE AZEVEDO LOPES DOS SANTOS, Paulo Jorge, P-4475-240 Gondim (PT)
(74) Representative: Pelayo de Sousa Henriques, Rui
(86) International application number: PCT/IB2003/000820
(87) International publication number: WO 2003/074223

(56) References cited:
- EP-A- 0 351 011
- EP-A- 0 754 562
- EP-A- 1 122 020
- AU-B- 552 707
- US-A- 5 004 311
- US-A- 5 148 326
- US-A- 5 285 320
- US-A- 5 585 019
- US-A- 5 991 470
- US-B1- 6 207 925
- PATENT ABSTRACTS OF JAPAN vol. 008, no. 286 (P-324), 27 December 1984 (1984-12-27) & JP 59 151101 A (TOSHIBA KK), 29 August 1984 (1984-08-29)

## Description

The present invention respects to a device and to a process of cutting and/or welding and/or marking body/ies according to the preamble of, respectively, claims 1 and 11 (see, for example, US-A-5 585 019), at high speed and of long range, namely for plastic films, using laser technology.

Preferably, the device and process in question are designed to processing, at high speed, materials of reduced thickness (as, for example, plastic films) in the following operations:
a) cutting, at high speed, of one or more overlaying films; or
b) welding, at high speed, of two or more overlaying films; or still
c) the two previous operations in simultaneous.

In practice, the films of the material to be processed may present widths that go beyond the two meters and thicknesses comprised between some micrometers and some millimetres, sometimes, constituting, sleeves of polymeric materials used in the manufacturing of plastic bags and packaging.

### State of the art

The equipments available in the plastic industry for the cutting and welding of films use mechanical solutions characterised by low production rates, reduced reliability (associated to elevated times of interruption for repairs), as well as important maintenance costs. In those equipments are adopted solutions that make necessary to impose sudden accelerations and decelerations to the plastic film to be processed, aiming at increasing the production rate. The cutting and/or the welding is(are) made, when the film stops, through a special tool, provided with parallel blades (for cutting and(or) welding), that, through a strike, cuts and/or welds the film. In the case of the welding hot blades are used. With these devices, the production is made at a rate of about 100 to 250 strikes per minute. The cut and/or the welding, made resorting to said blades, that in the case of this last operation are hot, are obtained controlling the time and the pressure of the contact between said blades and the film or overlaying films, during each strike, as well as the temperature of the blades, in the case of the welding.

On the other hand, in the plastic industry, is also know the use of laser technology namely of CO₂ and Nd:Yag for cutting, welding, moulding, and marking of acrylic, polyester, polystyrene and polyethylene, although, in this domain, the cutting speeds are low and the objects to cut present high thicknesses, thus, not being films. Are also known the excimer lasers, which, however, presently are only applicable in the investigation and they do not yet have generic application in the industry, except for a few specific applications.

The laser sources presently available emit beams with a diameter too high to allow its direct application in industrial applications of cutting, of welding and of marking. Typical diameters of the industrial laser beams are about 15 mm for CO₂ lasers and about 10 to 15 mm for Nd:Yag lasers.

Consequently, it becomes necessary to focus such beams aiming at concentrating the respective energy on a surface smaller than the area of the basic cross section of those beams. Such a surface is almost coincident with the focal blot, that is, with the circle to which, in practice, is reduced the beam on the focus.

Such focusing, that is, the concentration of the beam, is traditionally done by means of lenses or of parabolic mirrors with a shape similar to the spherical calotte (hereinafter designated parabolic mirrors in calotte).

For the current applications of cut, of welding and of marking based on industrial lasers, the diameters of the lenses and of the parabolic mirrors (that is, the diameter of the circumference in the cutting plan of the calotte in relation to the basic parabolic body) generally vary between about 20 mm and 100 mm.

The general principle of operation consists in placing, at each moment, the element of focusing, that is, the lens or the parabolic mirror in calotte, in the vicinity of the zone of the body to work at that moment.

The fact that the focusing element is in the vicinity of the zone to be worked results from the need to employ focusing elements with small focal distance. In fact, if the focal distance is big, the focal blot increases and its contour becomes a little less defined, deteriorating the quality of the work.

In effect, as the diameter of the focal blot (d) of a given focusing device (whether it is a lens, or a parabolic mirror in calotte) is directly proportional to the wave length (λ) of the radiation and to the focal distance (F) of the device and inversely proportional to the diameter of base (D) of the beam striking in such a device and as the basic diameter and the wave length are, generally, defined by the source of laser radiation, the decrease of the diameter of the focal blot until the values desired for the current industrial applications is done, in principle, by means of the correspondent reduction of the focal distance of the focusing devices.

Bearing in mind that aforementioned contingences, the devices of cutting, welding or marking by laser beams, in practice, work so that the focusing element is in the vicinity of the working zone of the body to be processed, for which such element is mobile. Since, normally, the laser radiation source is fixed, there is a set of flat mobile mirrors that are used for conveniently directing the beam so that it strikes on the focusing element appropriately, regardless of the position of this element.

The movements of the mirrors may occur either in translation, for example, by means of the employment of telescopic arms for the fixation of the mirrors, or in rotation, and yet, in certain equipments, both in translation and in rotation.

Although the mobile elements are the mirrors and not the source of laser radiation, the fact is that, even so, the flat mirrors and the respective sustaining arms constitute a set with a significant mass, whose inertia makes unfeasible the use of great speeds in sweeping the focal blot on the body to be worked. The typical sweeping speeds of those equipments are around the dozens of centimetres per minute.

In an alternative solution, which does not resort to intermediate mirrors for directing the beam to the focusing element, it is employed optical fibber for correctly directing the beam to that element. However, such a type of solutions has revealed adequate only for low power equipments. On the other hand, not event in this case is dispensed the mechanical system of movement of the focusing element for the immediate vicinity of the zone to be worked. So, essentially, the aforementioned problem of the low speed of sweeping maintains.

Still in other cases, namely of marking devices, the focusing device is static or, at least, moves accordingly to the direction of the beam itself (direction corresponding to the one of the depth of marking), the remaining movements being made by the very body to be marked through the putting in action the respective support table. Also in these cases the inertia of the table and of the body to be marked blocks the use of high sweeping speeds.

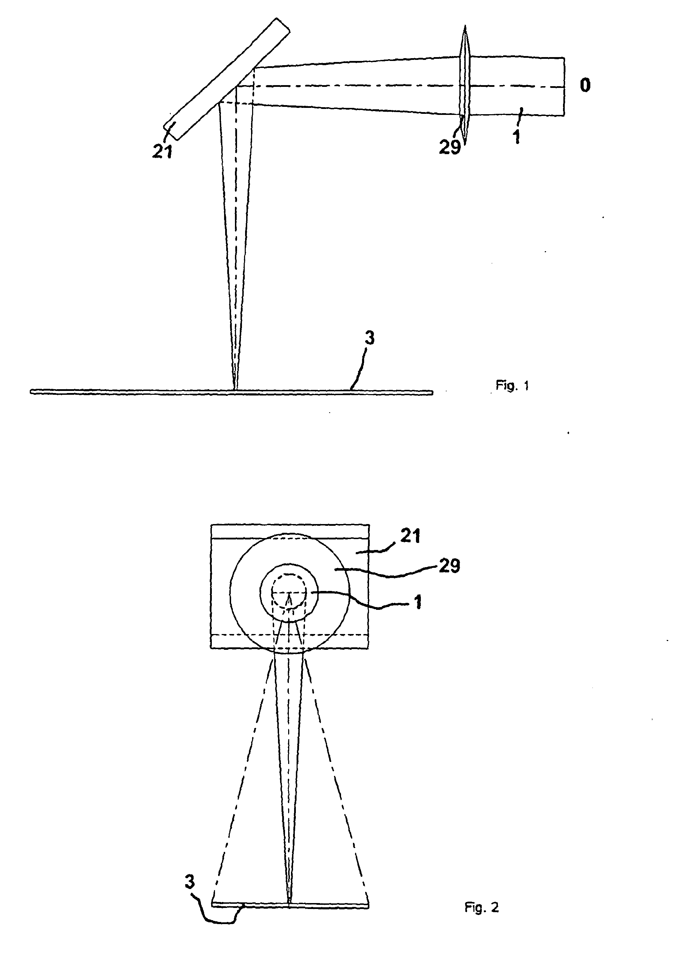

In the case of equipments destined to work only over a flat surface, as in certain types of marking equipments, since the only mobile element is a flat mirror in rotation along two orthogonal axes, are obtained sweeping speeds of the focal blot over the surface of the body to be marked relatively high. They are, essentially, equipments that work accordingly to the principle illustrated in figures 1 and 2.

However, since the flat mobile mirror is situated downwards from the focusing element, its distance from the surface of the body to be worked has to be sufficiently small otherwise the focal distance will be high, with the inconveniences already mentioned before on this matter. Well, the mentioned small distance, as is evident, does not permit the sweeping distance to be high, since the angle of incidence of the beam on the body is reduced very rapidly, leading to an accentuated deformation of the projection blot of such a beam on the surface of the same body.

In case of laser equipments destined to the creation of luminous effects, for application in discos and other similar purposes, the beam of laser light is also directed by means of a game of mirrors, generally flat, but the question of the focus (with the correspondent concentration of energy, characteristic of the industrial processes of cutting, welding and marking) normally is not considered, since its is intended that the beam be maintained cylindrical for the most of the length possible. Thus, although the range of the beam is big and the sweeping speed may equally be big, such systems may not be applicable to the industry of cutting, welding or marking of materials, at least with the traditional laser sources.

From all the aforesaid, we verify that there are no equipments for cutting, welding or marking by laser beams that combine simultaneously a high sweeping speed with a high range of sweeping.

### Purposes of the invention

One of the purposes of the present invention aims at a process of cutting and/or welding and/or marking, of long range and high speed.

In particular aims at a process of cutting and/or welding and/or marking of films of plastic material - of simple layer or of multiple overlaying layers (two or more) - reliable, with the possibility of processing very large films (until more than 2 meters width) from among an enlarged range of thicknesses (from some micrometers to some millimetres) and with an elevated rate.

Another purpose aims at a device that implements such a process, with mobile mechanical components smaller and in shorter numbers than the traditional devices, in particular so that it has a low maintenance cost.

Other purposes will become evident from the reading of the present description, as well as of the claims.

### Description of the invention

Accordingly to the present invention, body/ies is defined in claim 1 process of cutting and/or welding and/or marking body/ies is defined in claim 1.

Accordingly to a preferred embodiment, the beam strikes directly or indirectly on a rotating mirror with a rotation axis substantially orthogonal to the generatrix of the parabolic mirror being directly or indirectly reflected from that to this.

Accordingly to a particular embodiment - conceived to guarantee the parallel incidence of the rays of the beam of coherent radiation on the cited parabolic mirror - between the rotating mirror and the cylindrical parabolic mirror there is another cylindrical parabolic mirror whose generatrix is orthogonal to the generatrix of the already cited Cylindrical parabolic mirror.

For the particular cases in which is intended, for example, the simultaneous cutting and welding of two or more bodies, one resorts to particular embodiments of the invention accordingly to which the cylindrical parabolic mirror, of focusing over said bodies, is formed by two or three - or even more - distinct cylindrical parabolic surfaces, with the same generatrix and successively juxtaposed.

Accordingly to another particular embodiment of the invention, the parabolic surface(s) of the mentioned parabolic cylindrical mirror(s) is(are) substantially parabolic, being approximated by elliptical surfaces, cylindrical or others.

Accordingly to the aforementioned purposes, the present invention further defines a device of cutting and/or welding and/or marking of body/ies according to claim 11.

Accordingly to a preferred embodiment of that device, this is characterised in that it has a feeding table of the body(ies) at a substantially constant speed - or variable as a result of the desired geometry for the line to be processed - and in that the generatrix of the parabolic surface(s) of the cylindrical parabolic focusing mirror over this(ese) body(ies) is substantially parallel to the surface of the same body(ies) where the beam strikes and oblique in relation to the feeding direction, the angle between said generatrix and the cited direction being adjustable, its value depending essentially on the feeding speed of the body(ies) and on the sweeping speed of the body(ies) by the beam.

### Short description of the figures

The enclosed figures, presented as mere examples of a non limitative character, allow for a better comprehension of the present invention, as well as of the principle differences in relation to a solution of the state of the art.
Figure 1 represents, in a simplified way, in a side view, a device accordingly to one of the principles of functioning of the systems of the state of the art.
Figure 2 represents, also in a simplified way, the same device, in a frontal view.
Figure 3 represents, in a schematic way, in a side view, a device accordingly to the present invention, functioning in accordance with the principle of the process of the present invention.
Figure 4 represents, also in a schematic way, the same device, in a top plan.
Figure 5 represents, still in a schematic way, in a side view, a device accordingly to a particular embodiment of the present invention.
Figure 6 represents, likewise, the device of figure 5, but in a top plan.
Figure 7 represents, in a side view, the theoretical diagram of the energetic profile of the blot of coherent radiation striking over two overlying bodies, in the case of the cutting operation of said bodies.
Figure 8 represents, also in a side view, the diagram of the theoretical energetic profile of the blot of coherent radiation striking over two overlaying bodies, in the case of the welding operation of the said bodies.
Figure 9 represents, still in a side view, the diagram of the theoretical energetic profile of the blot of coherent radiation striking over two overlaying bodies, in the case of a mixed operation of welding and cutting of the said bodies, in which on one side of the cutting zone there is a welded zone but on the other side there is none.
Figure 10 represents, in a schematic way, again in a side view, a device accordingly to another particular embodiment of the present invention, device that is particularly suited for obtaining energetic profiles of the type of the ones represented in figure 9.
Figure 11 represents, also in a schematic way, likewise in a side view, a device accordingly with a further particular embodiment of the present invention, device that is particularly suited for obtaining energetic profiles in which the cutting zone is situated between two welding zones.

### Detailed description of the invention

The complementary description of the invention is made now with reference to the cited figures, where the diverse elements are referenced in the following way:
0 - Source of the coherent radiation;
1 - Radiation beam;
2nm - Any element "n" of the device for focusing/guiding the beam, disposed between the source (0) and the body(ies) to be processed, or any part "m" of such an element, being "n" an integer as well as "m" (when existent), namely:
   21 - Rotating mirror;
   22 - Cylindrical parabolic mirror;
   23 - Cylindrical parabolic mirror of focusing on the body(ies);
      231, 232, 233... - Distinct cylindrical parabolic surfaces of the parabolic mirror (23);
   29 - Convergent lens;
3 - Body(ies) to be worked;
   31 - Body;
   32 - Body;
   33 - Body;
   34 - Body;
   39 - Welded body.

As one verifies by the figures 1 and 2, that exemplify one of the classic systems of marking by laser, the beam (1) emitted by a source (0) is concentrated by a convergent lens (29) and projected on a rotating mirror (21), flat, that reflects it to the body (3) to be marked.

The rotation of said mirror (21) - namely around a system of two orthogonal axes, in which one is perpendicular to the surface of the body (3) - takes the focused beam (1) to sweep the said body. The limits of the sweeping zone of the body (3) by the beam (1) are represented in figure 2 by doted lines.

However, the need to maintain a small focal distance (that corresponds to the sum of the distance from the lens to the mirror with the distance of this one to the body), need that results from the contingency of having to guarantee a sufficient concentration of the energy over the point of the body (3) to treat at each moment - accordingly to the already previously explained - imposes that the lens must be at a small distance of that body.

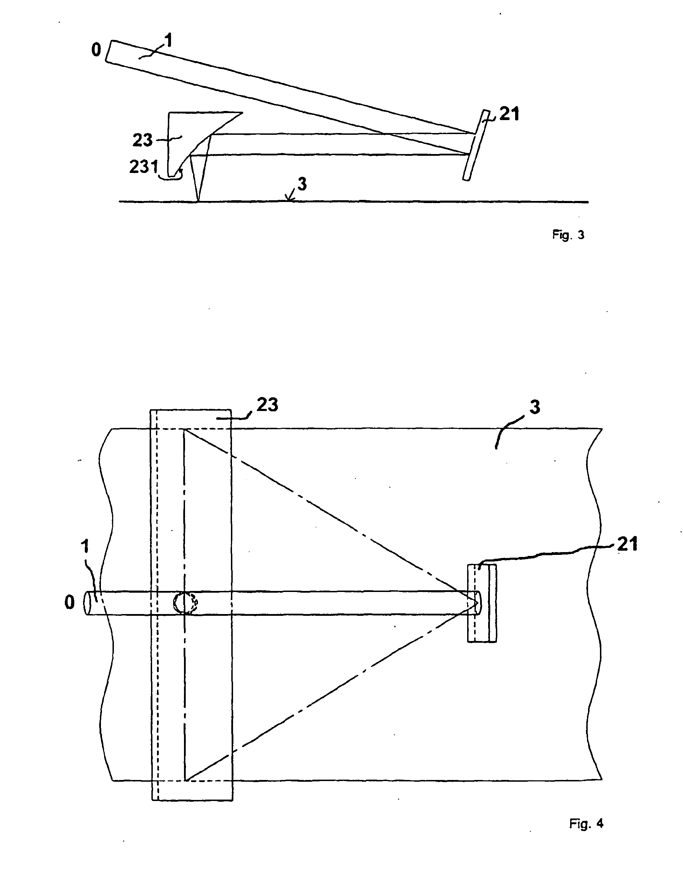

Accordingly to the process of the invention, and respective device, represented schematically in figures 3 and 4, the focusing element is a cylindrical parabolic mirror (23), along which moves, accordingly to the direction of the generatrix of the respective parabolic surface (231), the beam (1) coming from the source (0) namely via a rotating mirror (21) or via any other equivalent means known from the state of the art. The parabolic mirror, when it reflects the beam over the body (3), promotes its sweeping along a line whose orientation and shape depend, namely, on the feeding speed of the body (3), on the sweeping speed of the mirror (23) by the beam (1) and on the angle that the generatrix of that mirror (23) makes with the feeding direction of the said body.

The sweeping limits of the cylindrical parabolic mirror (23) by the beam (1), coming from a flat mirror (21), are represented in figure 4 by doted lines. Although in the example illustrated in that figure appears a flat rotating mirror (21), said mirror could be non flat, namely, parabolic in calotte, for pre-concentration - within certain limits - of the beam over the cylindrical parabolic mirror (23), or also cylindrical parabolic, namely with generatrix orthogonal to the one of the said cylindrical parabolic mirror (23), for partial pre-concentration of the beam, that is, concentration of the beam - also within limits compatible with the material of the mirror (23) - accordingly to a desired direction, namely orthogonal to the one accordingly which the cylindrical parabolic mirror (23) promotes the concentration of the cited beam.

On the other hand, although in the cited figure 4 the cylindrical parabolic mirror (23) is positioned orthogonally to the feeding direction, in here corresponding to the longitudinal direction of the body(ies) (3), in principle that will not be its positioning, which will vary, accordingly to the geometry desired for the line to sweep over the body(ies) (3) and to the feeding speed of the body(ies) (3) and to the sweeping speed of the mirror (23) by the beam (1).

In particular, in the cases in which is intended to process the body(ies) (3) accordingly to a straight line, the angle formed between the generatrix of the parabolic surface of the cylindrical parabolic mirror (23) and the feeding direction is given by the arc cosine of the quotient of the feeding speed by the sweeping speed (that is, the cosine of the said angle is identical to the quotient of the feeding speed by the sweeping speed).

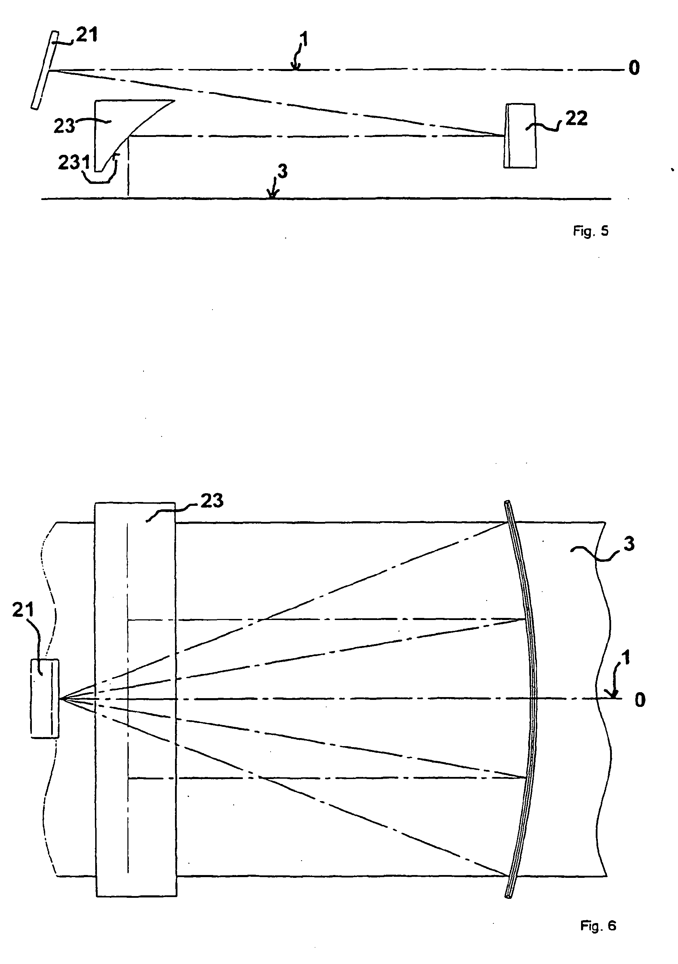

As results from the figures 3 and 5, for focusing purposes, or, namely in the case of the marking or of the cutting of thicker bodies, for regulation of the depth of the marking or of the cutting at each moment, the parabolic mirror (23) or the set of the two parabolic mirrors (22, 23) or this one or that one together with the rotating mirror (21) or even all the mirrors together with the source (0) are susceptible of translating accordingly to a direction substantially orthogonal to the one of the generatrix of the cylindrical parabolic mirror (23).
This way, it is possible to regulate the focusing over the body(ies) (3) to be processed, increasing or decreasing (until the size of the focal blot) the dimension of the projection blot of the beam over the body(ies) and consequently diminishing or increasing the intensity of the striking beam per surface unity, respectively.

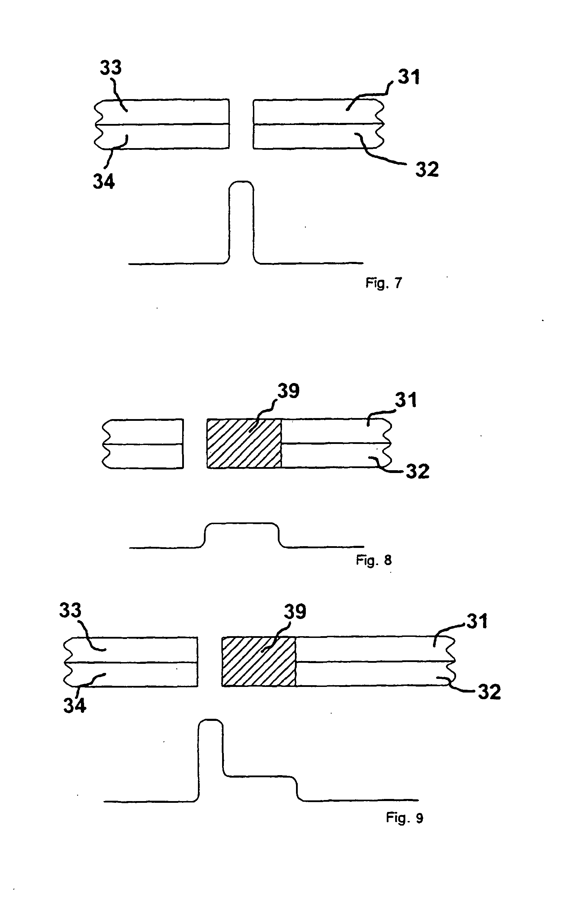

This may be observed in a schematic way in figures 7 and 8, in the first of which, where a pair of bodies (31, 32) is submitted to a beam with incidence concentrated over a small area (corresponding to a small width in the abscissae axis) and consequently with a high energy per surface unity (great amplitude of the beam, represented in the ordinates axis of the diagram), so that said beam, represented schematically in the diagram existent in the inferior part of the figure 7, produces the cut without welding of the overlying bodies (31, 32) that are thus detached from the bodies (33, 34).

On one hand, in figure 8, for a focusing making the beam striking on a bigger zone of the bodies (31, 32) - see the bigger width in the abscises axis - there is a lesser energetic intensity per surface unity (see a lesser amplitude of the beam in the ordinates axis), so that in the hit area (39), represented by a dashed zone, is produced the welding of the two bodies.

On the other hand, besides the fact that the optical system may translate accordingly to a direction substantially perpendicular to the plan of the body(ies) (3), it may also be foreseen that the same may translate accordingly to a direction substantially parallel to that plan - namely substantially orthogonal to the principal feeding direction of the said body(ies) - such translation movements may also be made, alternatively or together, by the said body(ies).

Rotation movements may also be foreseen in the plan or in the space of all or some of said elements. Besides, that is the case of the rotation movement in the plan of the parabolic mirror (23), as aforementioned, regarding the regulation of the angle with the feeding direction of the body(ies) (3).

Accordingly to the process and the device of the invention, where - as results, namely, from figure 4 - the problem of the declination of the angle of incidence of the beam (1) over the body(ies) (3) with the distance does not arise, one may obtain sweeping ranges, accordingly to a direction perpendicular to the feeding of the same body(ies) (3), of until more than 2m.

In figures 5 and 6, is illustrated an example of embodiment very analogous to the one of figures 3 and 4, with the sole difference of there existing additionally, between the rotating mirror (21) and the cylindrical parabolic mirror (23), another cylindrical parabolic mirror (22) - generally very open - mirror having a generatrix orthogonal to the one of the other parabolic mirror (23) and being positioned with the respective medium plan (parallel to its generatrix) in a way permanently orthogonal to the said generatrix of the other, in order to guarantee that the incidence of the rays of the beam on that other cylindrical parabolic mirror (23) is made successively through lines parallel between themselves and orthogonal to the generatrix of that same cylindrical parabolic mirror (23).

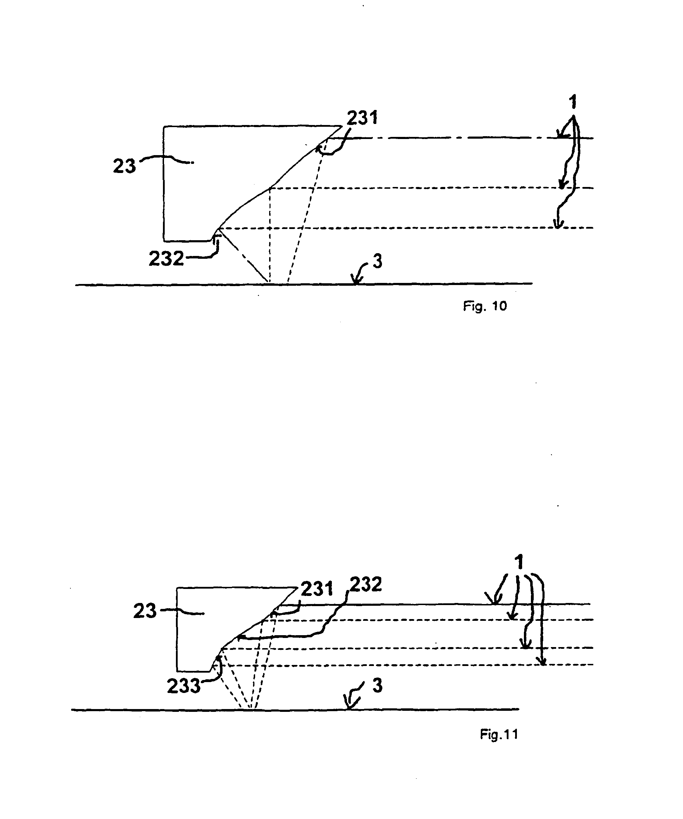

Finally, in figures 10 and 11, are represented schematically embodiments of the invention accordingly to which the parabolic mirror (23) is provided, respectively, with two cylindrical parabolic surfaces (231, 232) and with three cylindrical parabolic surfaces (231, 232, 233).

Such solutions are intended in particular to situations in which one intends to promote simultaneously the cutting and the welding, as represented schematically in figure 9 - which consists approximately in the simultaneous combination of the cases foreseen in figures 7 and 8 - corresponding to the cited embodiment of figure 10.

As results from the aforesaid, the profile resulting from the embodiment of figure 11 will be similar to the one of figure 9, but with the zone of maximum amplitude disposed between the two lateral zones of lesser amplitude that, in the bodies (31, 32, 33, 34), would correspond to two distinct welded zones (dashed zone) separated by the intermediate.cut zone.

This type of solutions is particularly intended for the cutting and/or welding and/or marking of one or more plastic films of simple layer or multiple overlying layers (two or more), that may, in this case, be configured as sleeves, more particularly polyethylene and/or polypropylene films and, specially, for the production in continuous of plastic packages, namely of plastic bags, from plastic films.

In the case of the cutting and/or marking and for CO₂ sources of laser radiation of power comprised between approximately 1 and 10kW and bodies (3) constituted by one or more films of material with a medium tax of absorption of that radiation superior to about 0,1% per micrometer of thickness and with thicknesses until about 100 micrometers (total), one may reach high sweeping speeds of the body(ies) (3), that is, speeds of until more than 50m/s. Likewise, in the case of the welding, as long as the bodies to be processed may be welded.

## Claims

1. Process of cutting and/or welding and/or marking a body or bodies, through the use of a beam (1) of coherent radiation, namely a laser beam (1), that sweeps the body/ies (3) to be worked and that is focused on it/them by , means of a focusing device (23) placed downstream from the source (0) of the said radiation, **characterised in that** the focusing element is constituted by a cylindrical parabolic mirror (23) that is placed immediately upstream from the cited body/ies and that is swept by the said beam (1) accordingly to a direction substantially parallel to the one of a generatrix of such a mirror (23), and **in that** the positions of the parabolic mirror (23) and of the body/ies relative to one another are such that the beam (1) sent from this parabolic mirror (23) to said body/ies (3) has an incidence direction on said body/ies (3) that is enclosed in a plane that is orthogonal to the body/ies surface/s on which the beam (1) is falling.

2. Process accordingly to the previous claim **characterised in that** the beam (1) strikes directly or indirectly on a rotating mirror (21) with a rotation axis substantially orthogonal to the generatrix of the parabolic mirror (23) being directly or indirectly reflected from that to this.

3. Process accordingly to the previous claim **characterised in that**, between the rotating mirror (21) and the cylindrical parabolic mirror (23), there is another cylindrical parabolic mirror (22) whose generatrix is orthogonal to the generatrix of the other cylindrical parabolic mirror.

4. Process accordingly to anyone of the previous claims **characterised in that** the cylindrical parabolic mirror (23) is formed by two distinct cylindrical parabolic surfaces (231, 232), with the same generatrix, juxtaposed.

5. Process accordingly to anyone of the claims 1 to 3 **characterised in that** the cylindrical parabolic mirror (23) is formed by three or more distinct cylindrical parabolic surfaces, with the same generatrix, successively juxtaposed.

6. Process accordingly to anyone of the previous claims **characterised in that** the parabolic surface/s of the cylindrical parabolic mirror/s (22, 23) is/are substantially parabolic, being approximated by elliptical surfaces, cylindrical or others.

7. Process accordingly to anyone of the previous claims **characterised in that**, the said high sweeping speed of the body/ies by the beam is of until more than 50m/s, in the case of the cutting and/or marking, when using CO₂ sources of laser radiation of power comprised between approximately 1 and 10kW over bodies (3) constituted by one or more films of material with a medium tax of absorption of that radiation superior to about 0,1% per micrometer of thickness and with total thicknesses until about 100 micrometers.

8. Process accordingly to anyone of the claims 1 to 6, **characterised in that**, the said high sweeping speed of the body is of until more than 50m/s, in the case of the welding and/or cutting, when using CO₂ sources of laser radiation of power comprised between approximately 1 and 10kW over bodies (3) that may be welded constituted by one or more films of material with a medium tax of absorption of that radiation superior to about 0,1% by micrometer of thickness and with total thicknesses until about 100 micrometers.

9. Process accordingly to claim 1 **characterised in that** the body/ies (3) to be processed is/are configured as plastic films of simple layer or multiple overlying layers, existing the possibility, in this case, of being configured as sleeves.

10. Process accordingly to claim 1, **characterised in that** the sweeping speed of the body/ies (3) by the beam is variable and depends on the desired geometry for the line to process.

11. Device of cutting and/or welding and/or marking a body or bodies, comprising a source (0) of a beam (1) of coherent radiation, namely a laser source, and a rotating mirror (21), **characterised in that**
a focusing element is placed immediately upwards from the body(ies) (3) to be processed, such focusing element being constituted by a cylindrical parabolic mirror (23), upstream
the rotating mirror (21) is disposed upstream from the parabolic mirror (23) and has a rotation axis substantially orthogonal to the generatrix of this one, the generatrix being substantially parallel to the body/ies surface, the rotation of said rotating mirror determining the sweeping of the beam (1) over the cylindrical parabolic mirror (23) along a line parallel to said generatrix, and the relative positions of the parabolic mirror (23), of the rotating mirror (21) and of the body/ies being such that the beam sent from this parabolic mirror (23) to said body/ies (3) has an incidence direction on said body/ies (3) that is enclosed in a plane that is substantially orthogonal to the body/ies surface/s on which the beam is falling.

12. Device accordingly to claim 11, **characterised in that** the mirror (23) is constituted by one, two, three or more cylindrical surfaces substantially parabolic, with the same generatrix and successively juxtaposed, being eventually approximated by elliptical surfaces, cylindrical or others,

13. Device accordingly to claim 11, **characterised in that** between the mirror (21) and the mirror (23) exists another cylindrical parabolic mirror (22) with the generatrix orthogonal to the one of said cylindrical parabolic mirror (23).

14. Device accordingly to anyone of the claims 11 to 13, **characterised in that** there is a feeding table of the body/ies (3) at a substantially constant speed and **in that** the generatrix of the parabolic surface(s) of the cylindrical parabolic mirror (23) is substantially parallel to the surface of the body/ies where the beam strikes and **in that** said generatrix is oblique in relation to the feeding direction, the angle between said generatrix and the cited direction being adjustable, its value depending essentially on the feeding speed of the body/ies (3) and on the sweeping speed of the body/ies by the beam.

15. Device accordingly to claim 14 **characterised in that**, the angle formed between the generatrix of the parabolic surface of the cylindrical parabolic mirror (23) and the feeding direction of the body/ies is given by the arc cosine of the quotient of the feeding speed of said body(ies) by the sweeping speed that is, the cosine of the said angle is identical to the quotient of the feeding speed by the sweeping speed in which case one may obtain a straight line sweeping over the body/ies(3).

16. Device accordingly to anyone of the claims 11 to 15 **characterised in that** the parabolic mirror (23) or the set of the two parabolic mirrors (22, 23) or this one or that one together with the rotating mirror (21) or even all the mirrors together with the source are susceptible of translating accordingly to a direction substantially orthogonal to the one of the generatrix of the cylindrical parabolic mirror (23).

17. Device accordingly to anyone of the claims 11 to 16 **characterised in that** the optical system may translate accordingly to a direction substantially perpendicular to the plan of the body/ies (3) and/or accordingly to a direction substantially parallel to this - namely substantially orthogonal to the principal feeding direction of the said body/ies - and **in that**, alternatively or together, said translation movements may be made by the same body/ies.

18. Device accordingly to anyone of claims 11 to 17 **characterised in that** the feeding table that feeds the body/ies (3) can encompass bodies with a width, considering the direction perpendicular to the one of feeding of the body/ies, of up to more than 2m, said body/ies being swept all across its their width.

19. Process of cutting and/or welding and/or marking of one or more polyethylene and/or polypropylene films **characterised by** the use of the process of any of claims 1 to 10 and/or of the device of any of claims 11 to 18.

20. Process accordingly to the previous claim **characterised in that** it is used in the production in continuous of plastic packages, namely of plastic bags, from plastic films.

## Patentansprüche

1. Verfahren des Schneiden und/oder Löten und/oder Markieren des Körpers/den Körper durch den Einsatz von einem Strahl (1) kohärenter Strahlung, nämlich eine Laserstrahlung (1), dass der/die Körper (3) kehrt, die gearbeitet werden, und dass an ihnen ausstrahlt, durch eine Fokussierung Vorrichtung (23), die stromabwärts von der Quelle (0) solche Strahlung angeordnet ist, **dadurch gekennzeichnet, dass** das Fokussierung Element aus einem zylindrischen parabolischen Spiegel (23) besteht, der sofort stromaufwärts von dem/den angegebenen Körper angeordnet ist, und ist durch solchen Strahl (1) gekehrt, nach einer Richtung im Wesentlichen parallel zu derjenigen eines Leitlineals solches Spiegels (23) und dass die stellungen des parabolischen Spiegels (23) und des Körpers/der Körper relativ zu einander sind solche, dass der Strahl (1) der aus diesen parabolischen Spiegel (23) nach solchem/solchen Körper (3) geschickt wird, eine Anströmwinkel Richtung auf solchem/solchen Körper (3) hat, die geschlossen in einer Ebene ist, die orthogonal zu der/den Körperoberfläche/n ist, auf welchen der Strahl (1) fällt.

2. Verfahren nach dem vorderen Anspruch **dadurch gekennzeichnet, dass** der Strahl (1) direkt oder indirekt auf einem rotierenden Spiegel (21) fällt, mit einer Drehachse im Wesentlichen orthogonal zu dem Leitlineal des parabolischen Spiegels (23), und sie direkt oder indirekt von derjenigen nach diesem widerspiegelt ist.

3. Verfahren nach dem vorderen Anspruch **dadurch gekennzeichnet, dass** zwischen dem rotierenden Spiegel (21) und dem zylindrischen parabolischen Spiegel (23) ein anderer zylindrische parabolische Spiegel (22) steht, dessen Leitlineal orthogonal zu dem Leitlineal des anderes zylindrischen parabolischen Spiegel ist.

4. Verfahren nach einem der vorderen Ansprüche, **dadurch gekennzeichnet, dass** der zylindrische parabolische Spiegel (23) mit zwei verschiedenen zylindrischen parabolischen Oberflächen (213, 232) gebildet ist, mit demselben Leitlineal, die nebeneinander gestellt sind.

5. Verfahren nach einem der Ansprüche 1 bis 3, **dadurch gekennzeichnet, dass** der zylindrische parabolische Spiegel (23) aus drei oder mehr verschiedenen zylindrischen parabolischen Oberflächen besteht, mit demselben Leitlineal, die nacheinander nebeneinander gestellt sind.

6. Verfahren nach einem der vorderen Ansprüche, **dadurch gekennzeichnet, dass** die parabolische/n Oberfläche/n des/der zylindrischen parabolischen Spiegels/Spiegel (22, 23) im Wesentlichen parabolisch ist/sind, und sie näheren durch elliptischen Oberflächen, zylindrischen oder anderen.

7. Verfahren nach einem der vorderen Ansprüche, **dadurch gekennzeichnet, dass** solche hohe kehrende Geschwindigkeit des Körpers durch den Strahl bis mehr als 50 m/s ist, im Falle von Schneiden und/oder Markieren, wann Quellen aus Laserstrahlung von CO₂ von Kraft benutzt sind, umgefasst zwischen ca. 1 und 10kW über Körper (3) die aus eine oder mehr Folien aus Materialien bestehen, mit einer Medium Steuern von Absorption dieser Strahlung höher als ca. 0,1% per Mikrometer Dick und mit gesamt Dick bis ca. 100 Mikrometers.

8. Verfahren nach einem der Ansprüche 1 bis 6, **dadurch gekennzeichnet, dass** solche hohe kehrende Geschwindigkeit des Körpers auf bis mehr als 50 m/s ist, im Falle von Löten und/oder Schneiden, wann Quellen aus Laserstrahlung von CO₂ von Kraft benutzt sind, umgefasst zwischen ca. 1 und 10kW über Körper (3) die gelötet werden können, die aus eine oder mehr Folien aus Materialien bestehen, mit einer Medium Steuern von Absorption dieser Strahlung höher als ca. 0,1% per Mikrometer Dick und mit gesamt Dick bis ca. 100 Mikrometers.

9. Verfahren nach Anspruch 1, **dadurch gekennzeichnet, dass** der/die Körper die prozessiert werden, konfiguriert als Kunststoffolien auf einfache Lagen oder mehrere darüberliegenden Lagen ist/sind, und in diesem Fall gibt es die Möglichkeit, konfiguriert als Schutzhülse zu sein.

10. Verfahren nach Anspruch 1, **dadurch gekennzeichnet, dass** die kehrende Geschwindigkeit des/der Körpers/Körper (3) durch den Strahl variabel ist und hängt von der gewünschten Geometrie ab für die Strecke zu verarbeiten.

11. Vorrichtung des Schneiden und/oder Löten und/oder Markieren des Körpers/den Körper, die aus einer Quelle (0) eines Strahls (1) auf kohärenter Strahlung bestehen, nämlich eine Laserquelle, und ein rotierender Spiegel, **dadurch gekennzeichnet, dass**
ein Fokussierung Element wird gesetzt sofort stromaufwärts von dem/den angegebenen Körper die gearbeitet werden, solcher Fokussierung Element besteht aus einem zylindrischen parabolischen Spiegel (23),
der rotierende Spiegel (21) ist stromaufwärts von dem parabolischen Spiegel (23)angeordnet und hat eine Drehachse im Wesentlichen orthogonal zu dem Leitlineal von diesem, das Leitlineal ist im Wesentlichen parallel zu der Oberfläche des/der Körpers/Körper und die Drehung solches rotierenden Spiegels determiniert das Kehren des Stahls (1) über den zylindrischen parabolischen Spiegel (23) entlang einer Linie parallel zu solchem Leitlineal, und die relative Stellungen des parabolischen Spiegels (23), und des rotierenden Spiegels (21) und des/der Körper sind solche, dass der Strahl geschickt aus diesen parabolischen Spiegel (23) nach solchem/n Körper/n (3) hat eine Anströmwinkel Richtung auf solchem/n Körper/n (3), dass geschlossen in einer Ebene ist, die im Wesentlichen orthogonal zu der/n Oberfläche/n des Körpers/Körper auf welchen/e der Strahl fällt.

12. Vorrichtung nach Anspruch 11, **dadurch gekennzeichnet, dass** der Spiegel (23) aus eine, zwei, drei oder mehrere zylindrischen im Wesentlichen parabolischen Oberflächen besteht, die mit demselben Leitlineal und nacheinander nebeneinander gestellt sind, und sie näheren durch elliptischen Oberflächen, zylindrischen oder anderen.

13. Vorrichtung nach Anspruch 11, **dadurch gekennzeichnet, dass** zwischen dem Spiegel (21) und dem Spiegel (23) ein anderer zylindrische parabolische Spiegel (22) steht, mit dem Leitlineal orthogonal zu dem von solchem zylindrischen parabolischen Spiegel (23).

14. Vorrichtung nach einem der Ansprüche 11 bis 13, **dadurch gekennzeichnet, dass** es ein Fütterungstisch des/der Körpers/Körper (3) gibt, bei einer im Wesentlichen konstanten Geschwindigkeit, und dass das Leitlineal der parabolischen Oberfläche/n des zylindrischen parabolischen Spiegels (23) im Wesentlichen parallel zu der Oberfläche des/der Körpers/ Körper ist, worauf der Strahl fällt, und dass solches Leitlineal schief ist, in Bezug auf die Fütterung Richtung, der Winkel zwischen solchem Leitlineal und der angegebenen Richtung einstellbar ist, sein Wert im Wesentlichen hängt von der Fütterung Geschwindigkeit des/der Körpers/ Körper (3) ab und von der Kehren Geschwindigkeit des/den Körpers/Körper durch den Strahl ab.

15. Vorrichtung nach Anspruch 14, **dadurch gekennzeichnet, dass** der Winkel der zwischen dem Leitlineal der parabolischen Oberfläche/n des zylindrischen parabolischen Spiegels (23) und der Fütterung Richtung des/der Körpers/Körper gebildet ist, ist durch das Arcuscosinus der Quotient der Fütterung Geschwindigkeit solches/n Körpers/Körper erforderlich, durch die Kehren Geschwindigkeit, d.h, das Cosinus solches Winkels ist identisch zu der Quotient der Fütterung Geschwindigkeit durch die Kehren Geschwindigkeit, in welchem Fall man eine gerade Linie ermitteln kann, die durch den/die Körper kehrt.

16. Vorrichtung nach einem der Ansprüche 11 bis 15, **dadurch gekennzeichnet, dass** der parabolische Spiegel (23) oder die beiden parabolischen Spiegeln (22, 23) oder dieser oder derjenige zusammen mit dem rotierenden Spiegel (21) oder auch alle Spiegel zusammen mit der Quelle in der Lage sind, nach einer Richtung im Wesentlichen orthogonal zu dem Leitlineal des zylindrischen parabolischen Spiegels (23) zu vorschüben.

17. Vorrichtung nach einem der Ansprüche 11 bis 16, **dadurch gekennzeichnet, dass** das optische System nach einer Richtung im Wesentlichen senkrecht zu dem Plan des Körpers/der Körper (3) und/oder nach einer Richtung im Wesentlichen parallel zu diesem Vorschüben kann
nämlich im Wesentlichen orthogonal zu der Haupt Fütterung Richtung solches/solchen Körper
und dass, im Alternativ oder zusammen, solche Vorschubbewegungen durch demselben/denselben Körper gemacht werden können.

18. Vorrichtung nach einem der Ansprüche 11 bis 17, **dadurch gekennzeichnet, dass** der Fütterungstisch der das/die Körper (3) füttert, wenn man die Richtung senkrecht zu derjenigen der Fütterung des Körpers/der Körper betrachtet, Körper mit Breite auf bis mehr als 2m umfassen kann, und solche Körper sind ganz durch sein/e Breite gekehrt.

19. Verfahren des Schneiden und/oder Löten und/oder Markieren eine oder mehrere Polyäthylen und/oder Polypropylen Folien, **dadurch gekennzeichnet, dass** die Benutzung der Verfahren von einigen der Ansprüche 1 bis 10 und/oder von der Vorrichtung von einigen der Ansprüche 11 bis 18.

20. Verfahren nach dem vorderen Anspruch, **dadurch gekennzeichnet, dass** er für Produktion im Dauerbetrieb von Kunststoffpakete verwendet ist, nämlich von Plastiktüten, aus Kunststoffolien.

## Revendications

1. Procédé de coupe et/ou de soudage et/ou de marquage d'un/de corps, au moyen d'un faisceau (1) de radiation cohérente, notamment un faisceau laser (1) qui balaye le/s corps (3) à travailler et qui est focalisé sur eux au moyen d'un dispositif de focalisation (23) placé en aval de la source (0) de cette radiation, **caractérisé en ce que** l'élément de focalisation est constitué par un miroir parabolique cylindrique (23) qui est placé immédiatement en amont du/des corps cité/s et qui est balayé par le dit faisceau (1) selon une direction substantiellement parallèle à celle d'une génératrice de ce miroir (23), et **en ce que** les positions du miroir parabolique (23) et du/des corps sont de telle forme que le faisceau envoyé par ce miroir parabolique (23) vers ce/s corps possède une direction d'incidence sur ce/s corps (3) qui est enfermée dans un plan orthogonal à la /aux surface/s du/des corps où tombe le faisceau (1).

2. Procédé selon la revendication antérieure **caractérisé en ce que** le faisceau (1) frappe directement ou indirectement contre un miroir rotatif (21) avec un axe de rotation substantiellement orthogonale à la génératrice du miroir parabolique (23), étant directement ou indirectement réfléchi de celui-là à celui-ci,

3. Procédé selon la revendication antérieure **caractérisé en ce qu'** entre le miroir rotatif (21) et le miroir parabolique cylindrique (23) il existe un autre miroir parabolique cylindrique (22) dont la génératrice est orthogonale à la génératrice de l'autre miroir parabolique cylindrique.

4. Procédé selon l'une quelconque des revendications antérieures **caractérisé en ce que** le miroir parabolique cylindrique (23) est formé par deux surfaces paraboliques cylindriques distinctes (231, 232), avec la même génératrice, contiguës.

5. Procédé selon l'une quelconque des revendications 1 à 3 **caractérisé en ce que** le miroir parabolique cylindrique (23) est formé par trois ou plusieurs surfaces paraboliques distinctes, avec la même génératrice, successivement contiguës.

6. Procédé selon l'une quelconque des revendications antérieures **caractérisé en ce que** la/les surface/s parabolique/s du/des miroir/s parabolique/s cylindrique/s (22, 23) est/sont substantiellement parabolique/s, étant approchée/s par des surfaces elliptiques, cylindriques ou d'autres.

7. Procédé selon l'une quelconque des revendications antérieures **caractérisé en ce que** la dite haute vélocité de balayage du corps par le faisceau est de jusqu'à plus de 50m/s, au cas de coupe et/ou de marquage, quand on utilise des sources de radiation laser de CO₂ de puissance comprise entre environ 1 et 10kW sur des corps (3) constitués par une ou plusieurs pellicules de matériel avec un taux moyen d'absorption de cette radiation supérieur à environ 0,1% par micromètre d'épaisseur et avec un total des épaisseurs jusqu'à 100 micromètres.

8. Procédé selon l'une quelconque des revendications 1 à 6 **caractérisé en ce que** la dite haute vélocité de balayage du corps est de jusqu'à plus de 50m/s, au cas de soudage et/ou de coupe, quand on utilise des sources de radiation laser de CO₂ de puissance comprise entre environ 1 et 10kW sur des corps (3) qui peuvent être soudés, constitués par une ou plusieurs pellicules de matériel avec un taux moyen d'absorption de cette radiation supérieure à environ 0,1% par micromètre d'épaisseur et avec un total des épaisseurs jusqu'à 100 micromètres.

9. Procédé selon la revendication 1, **caractérisé en ce que** le/s corps (3) à traiter est/sont configuré/s comme des pellicules en plastique de couche simple ou de couches multiples superposées, existant la possibilité, dans ce cas, d'être configurées comme des manches.

10. Procédé selon la revendication 1, **caractérisé en ce que** la vélocité de balayage du/des corps (3) par le faisceau est variable et dépendante de la géométrie désirée pour la ligne à traiter.

11. Dispositif de coupe et/ou de soudage et/ou de marquage d'un/de corps, comprenant une source (0) d'un faisceau (1) de radiation cohérente, notamment une source à laser et un miroir rotatif (21), **caractérisé en ce qu'/que**
un élément de focalisation est placé immédiatement en amont du/des corps (3) à traiter, cet élément de focalisation étant constitué par un miroir cylindrique parabolique (23),
le miroir rotatif (21) est placé en amont du miroir parabolique (23) et possède un axe de rotation substantiellement orthogonal à la génératrice de celui-ci, la génératrice étant substantiellement parallèle à la surface du/des corps et la rotation de ce miroir rotatif déterminant le balayage du faisceau (1) sur le miroir parabolique cylindrique (23) le long d'une ligne parallèle à cet génératrice, et les positions relatives du miroir parabolique (23), du miroir rotatif (21) et du/des corps sont tels que le faisceau envoyé vers ce/s corps (3) à partir de ce miroir parabolique (23) a une direction d'incidence sur ce/s corps (3) qui est enfermée dans un plan substantiellement orthogonal à la /aux surface/s du/des corps où tombe le faisceau (1).

12. Dispositif selon la revendication 11, **caractérisé en ce que** le miroir (23) est constitué par une, deux, trois ou plus surfaces cylindriques substantiellement parabolique/s, avec la même génératrice et successivement contiguës, étant éventuellement approchée/s par des surfaces elliptiques, cylindriques ou d'autres.

13. Dispositif selon la revendication 11, **caractérisé en ce que** entre le miroir (21) et le miroir (23) il existe un autre miroir parabolique (22) avec la génératrice orthogonale à celle du dit miroir parabolique cylindrique (23).

14. Dispositif selon l'une quelconque des revendications 11 à 13, **caractérisé en ce qu'**il y a une table d'alimentation du/des corps (3) avec une vélocité substantiellement constante et **en ce que** la génératrice de la/des surface/s parabolique/s du miroir parabolique cylindrique (23) est substantiellement parallèle à la surface du/des corps où le faisceau frappe et **en ce que** cette génératrice est oblique vis-à-vis la direction d'alimentation, l'angle entre cette génératrice et la direction mentionnée étant ajustable, sa valeur dépendant essentiellement de la vélocité d'alimentation du/des corps (3) et de la vélocité de balayage du/des corps par le faisceau.

15. Dispositif selon la revendication 14 **caractérisé en ce que** l'angle formé entre la génératrice de la/des surface/s du miroir parabolique cylindrique (23) et la direction d'alimentation du/des corps est donné par l'arc cosinus du quotient de la vélocité d'alimentation de ce/ces corps par la vélocité de balayage, c'est-à-dire, le cosinus de cet angle est identique au quotient de la vélocité d'alimentation par la vélocité de balayage, cas où on peut obtenir une ligne droite balayant sur le/les corps.

16. Dispositif selon l'une quelconque des revendications 11 à 15 **caractérisé en ce que** le miroir parabolique (23) ou le groupe des deux miroirs paraboliques (22, 23) ou celui-ci ou celui-là accompagné du miroir rotatif (21) ou même tous les miroirs accompagnés de la source sont susceptibles d'avoir un mouvement de translation selon une direction substantiellement orthogonale à la direction de la génératrice du miroir parabolique cylindrique (23).

17. Dispositif selon l'une quelconque des revendications 11 à 16 **caractérisé en ce que** le système optique peut avoir un mouvement de translation selon une direction substantiellement perpendiculaire au plan du/des corps (3) et/ou selon une direction substantiellement parallèle à celui-ci - notamment substantiellement orthogonale à la direction d'alimentation principale de ce/s corps - et **en ce que**, alternativement ou ensemble, ces mouvements de translation peuvent être faits par le/s même/s corps.

18. Dispositif selon l'une quelconque des revendications 11 à 17 **caractérisé en ce que** la table d'alimentation qui alimente le/s corps (3) peut encadrer des corps avec une largeur, considérant la direction perpendiculaire à celle de l'alimentation du/des corps, de jusqu'à plus de 2m, ce/s corps étant balayé/s le long de sa/ses largeur/s.

19. Procédé de coupe et/ou de soudage et/ou de marquage d'une ou plusieurs pellicules de polyéthylène et/ou polypropylène **caractérisé en ce qu'**on utilise le procédé de l'une quelconque des revendications 1 à 10 et/ou le dispositif de l'une quelconque des revendications 11 à 18.

20. Procédé selon la revendication antérieure **caractérisé en ce qu'**il est utilisé dans la production en continu d'emballages plastiques, notamment des sacs plastiques, à partir de pellicules plastiques.
